(19) Europäisches Patentamt
European Patent Office
Office européen des brevets

(11) **EP 3 177 908 B1**

(12) **EUROPEAN PATENT SPECIFICATION**

(45) Date of publication and mention
of the grant of the patent:
**17.04.2019 Bulletin 2019/16**

(51) Int Cl.:
***G01N 15/14*** (2006.01)

(21) Application number: **15745329.1**

(22) Date of filing: **20.07.2015**

(86) International application number:
**PCT/US2015/041069**

(87) International publication number:
**WO 2016/022276 (11.02.2016 Gazette 2016/06)**

(54) **EVALUATION OF MULTI-PEAK EVENTS USING A FLOW CYTOMETER**

AUSWERTUNG VON MEHRFACHSPITZENEREIGNISSEN MITHILFE EINES
DURCHFLUSSZYTOMETERS

ÉVALUATION D'ÉVÉNEMENTS MULTI-PICS À L'AIDE D'UN CYTOMÈTRE EN FLUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.08.2014 US 201462034002 P**

(43) Date of publication of application:
**14.06.2017 Bulletin 2017/24**

(73) Proprietor: **Beckman Coulter Inc.
Brea, California 92821 (US)**

(72) Inventors:
• **DEGEAL, Jeffrey W.**
**Loveland, Colorado 80537 (US)**
• **THRASHER, Thomas L.**
**Fort Collins, Colorado 80525 (US)**
• **ROSS, Carley**
**Loveland, Colorado 80538 (US)**
• **BAILEY, Bruce G.**
**Fort Collins, Colorado 80525 (US)**

(74) Representative: **Müller-Boré & Partner
Patentanwälte PartG mbB
Friedenheimer Brücke 21
80639 München (DE)**

(56) References cited:
**US-A1- 2002 028 434    US-A1- 2010 233 753
US-A1- 2010 314 555    US-A1- 2012 236 291**

**Description**

BACKGROUND

Flow cytometers operate to evaluate the contents of a sample. Typically the sample is passed through a fluid nozzle which aligns the particles within the sample into roughly a single file line. The particles are then injected into a fluid stream. A laser beam illuminates the particles, which generates radiated light including forward scattered light, side scattered light, back scattered light, and fluorescent light. That radiated light can then be detected and analyzed to determine one or more characteristics of the particles.

US 2010/233753 A1 relates to a light measurement apparatus, in which a light is irradiated to a sample dispersed in a liquid flowing through a flow passage.

US 2012/236291 A1 relates to a method of analyzing pulses from a flow cytometer.

SUMMARY

In general terms, this disclosure is directed to a flow cytometer. In one possible configuration and by non-limiting example, the flow cytometer operates to identify and evaluate multi-peak events, such as to provide more accurate characterization of particles.

One aspect is a method of characterizing particles using a flow cytometer, the method comprising: passing one or more particles in a fluid stream through a light beam of the flow cytometer; detecting radiated light as the one or more particles in a fluid stream pass through the light beam and generating a waveform based on the detected radiated light; determining that the waveform is a multi-peak waveform; and characterizing the one or more particles by evaluating the multi-peak waveform to distinguish between a single particle and multiple particles.

Another aspect is a flow cytometer comprising: a fluid nozzle configured to generate a fluid stream, wherein the fluid stream includes particles therein; a light source configured to generate a light beam to illuminate the fluid stream and the particles; a detector configured to detect radiated light from the fluid stream and to generate waveforms associated with the particles; and at least one processing device configured to:

identify multi-peak waveforms; evaluate the multi-peak waveforms to identify at least some of the multi-peak waveforms as being associated with single particles, and at least other of the multi-peak waveforms as being associated with multiple particles; and
characterize the particles as being either single particles or multiple particles based on the evaluation.

BRIEF DESCRIPTION OF THE DRAWINGS

FIG. 1 is a schematic block diagram illustrating an example of a flow cytometer.
FIG. 2 (including FIGS. 2A-2D) is a diagram depicting exemplary waveforms generated by one or more detectors of the flow cytometer shown in FIG. 1, and illustrating examples of multi-peak events.
FIG. 3 is a flow chart illustrating an example method of operating a flow cytometer.
FIG. 4 is a flow chart illustrating an example of a setup operation of the method shown in FIG. 3.
FIG. 5 illustrates a portion of the example flow cytometer shown in FIG. 1.
FIG. 6 is a plot of an example waveform detected upon the passage of a beam through a light beam of the flow cytometer shown in FIG. 1.
FIG. 7 is a flow chart illustrating an example of the acquire operation of the method shown in FIG. 3.
FIG. 8 is a flow chart illustrating an example of an operation of detecting one or more particles using the flow cytometer shown in FIG. 1.
FIG. 9 is a flow chart illustrating an example of an operation of evaluating for a multi-peak event.
FIG. 10 is a flow chart illustrating a method of evaluating a multi-peak event using a valley analysis.
FIG. 11 is a diagram illustrating an example of a gently curved valley between adjacent peaks of a multi-peak waveform.
FIG 12 is a diagram illustrating an example of a pointed valley between adjacent peaks of a multi-peak waveform.
FIG. 13 is a flow chart illustrating a method of evaluating a multi-peak event using a multiple channel analysis.
FIG. 14 illustrates waveforms generated by multiple channels of detectors of a flow cytometer, such as the flow cytometer shown in FIG. 1.

DETAILED DESCRIPTION

Various embodiments will be described in detail with reference to the drawings, wherein like reference numerals represent like parts and assemblies throughout the several views. Reference to various embodiments does not limit the scope of the claims attached hereto. Additionally, any examples set forth in this specification are not intended to be limiting and merely set forth some of the many possible embodiments for the appended claims.

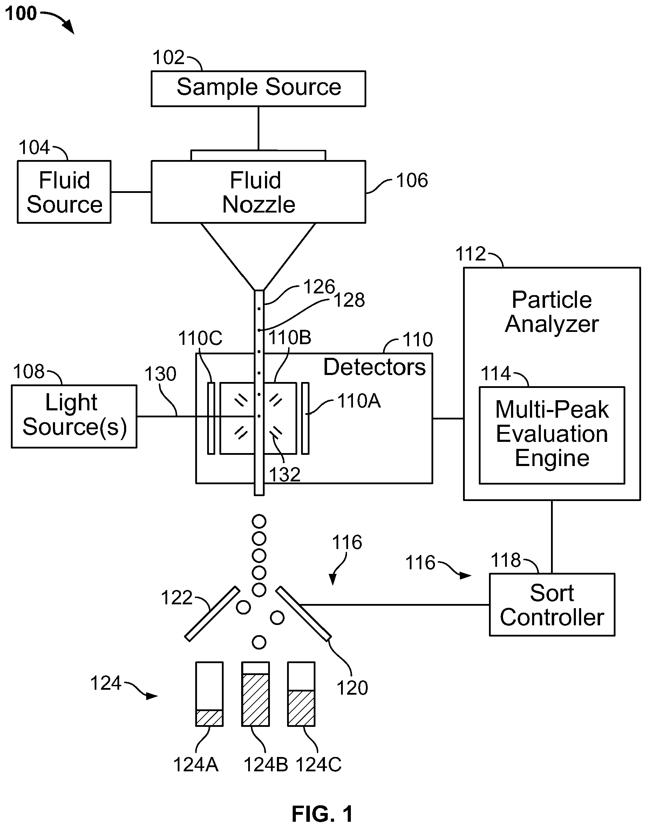

FIG. 1 is a schematic block diagram illustrating an example of a flow cytometer 100. In this example, the flow cytometer includes a sample source 102, a fluid source 104, a fluid nozzle 106, a light source 108, detectors 110 (such as including detectors 110A, 110B, and 110C), a particle analyzer 112 including a multi-peak evaluation engine 114, a sorting system 116 including a sort controller 118 and sorting plates 120 and 122, and containers 124 (such as including containers 124A, 124B, and 124C, for example). The fluid nozzle 106 generates a fluid stream 126 containing particles 128 therein, and the light source 108 generates a light beam 130. Radiated light 132 is generated when the light beam 130 intersects the fluid stream 126 and particles 128 contained therein. Other embodiments of the flow cytometer 100 include more, fewer, or different components than the example illustrated in FIG. 1.

The sample source 102 is the source of the sample that is provided to the flow cytometer for analysis. The sample includes the individual particles 128 that are illuminated by the light beam 130 and analyzed by the particle analyzer. A wide variety of different types of samples can be analyzed by the flow cytometer. Several examples of types of samples include blood, semen, sputum, interstitial fluid, cerebrospinal fluid, cell culture, seawater, and drinking water. The sample may be in the form of a prepared sample, such as lysed blood, labeled particles in suspension, immunoglobulin-labeled cells, or DNA-stained cells, achieved commonly by adding reagents and performing protocols as commonly known in the art. Examples of types of particles include beads, blood cells, sperm cells, epithelial cells, cancer cells, viruses, bacteria, yeast, plankton, microparticles (e.g., from plasma membrane of cells), and mitochondria. The sample source 102 can include one or more containers, such as test tubes, that hold the sample to be analyzed. A fluid transfer system is provided in some embodiments, such as to aspirate the sample from the container and deliver the sample to the fluid nozzle 106.

The sample is typically injected into a sheath fluid within the flow cytometer, which is provided by a sheath fluid source 104. An example of a sheath fluid is saline. An example of the fluid source 104 is a container storing saline therein, and a fluid transfer system operable to deliver the sheath fluid from the fluid source 104 to the fluid nozzle 106.

In some embodiments a fluid nozzle 106 is provided to generate the fluid stream 126 and to inject the particles 128 of the sample into the fluid stream. An example of a fluid nozzle 106 is a flow cell. The fluid nozzle 106 typically includes an aperture having a size selected to at least be larger than the sizes of particles of interest in the sample, but small enough to arrange the particles into a narrow stream. Ideally the particles are arranged in a single file or near single file arrangement so that a single particle, or a small number of particles (e.g., 1-3), can be passed through the light beam 130 at a time. In some embodiments the particles are focused using hydrodynamic, acoustic, or magnetic forces.

A light source 108 (which, as discussed herein, can include one or more light sources) generates at least one light beam that is directed toward the fluid stream 126. Examples of light sources 108 include a laser and an arc lamp. In some embodiments the light beam 130 passes through an optics assembly, such as to focus the light beam onto the fluid stream 126. In some embodiments the light beam is a laser beam.

The light beam 130 from the light source 108 intersects the fluid stream 126. The particles 128 contained in the light beam 130 disturb the light beam 130 and generate radiated light 132. The type and pattern of radiated light 132 depends upon the type and size of the particles 128, but the radiated light 132 can include forward scattered light, side scattered light, back scattered light, as well as fluorescent light (which occurs when light rays are absorbed and reemitted by the particle, which is detectable by the corresponding change in wavelength (i.e., color) of the light rays).

One or more detectors 110 are provided to detect radiated light 132. In this example, the detectors 110 include a detector 110A arranged to detect forward scatter and florescence, a detector 110B arranged to detect side scatter and florescence, and detector 110C arranged to detect back scatter and florescence. One example of a detector 110 is a photomultiplier.

The particle analyzer 112 operates to receive signals from the one or more detectors 110 to perform various operations to characterize the particles 128. In some embodiments the particle analyzer 112 includes one or more processing devices and a computer-readable storage device that stores data instructions, which when executed by the processing device cause the processing device to perform one or more operations, such as those discussed herein. In some embodiments the particle analyzer 112 includes an analog to digital converter and firmware.

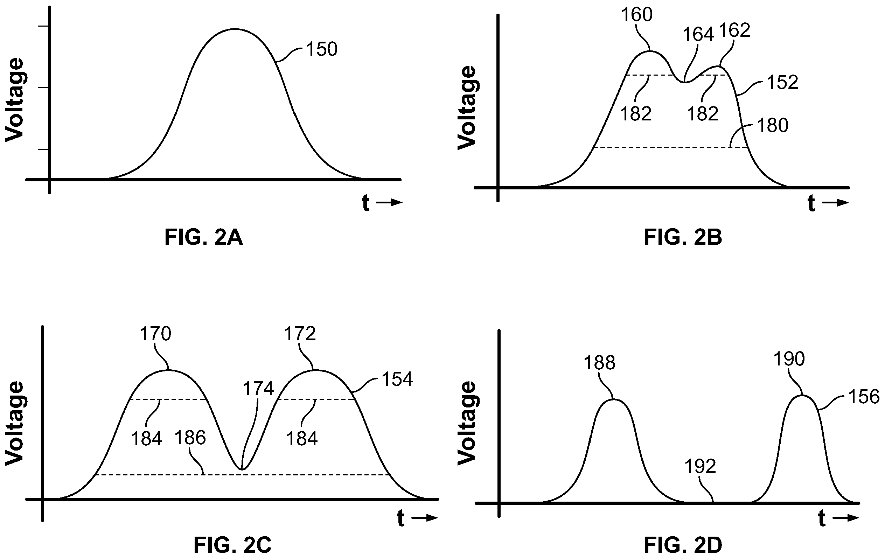

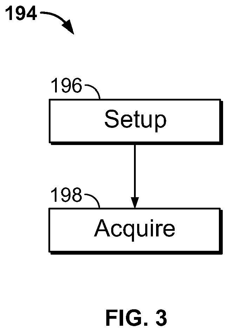

The particle analyzer 112 includes a multi-peak evaluation engine 114 that operates to detect and evaluate multi-peak events. Examples of multi-peak events are discussed herein, such as with reference to FIG. 2. Examples of operations performed by the multi-peak evaluation engine 114 are illustrated and described with reference to FIGS. 3-14.

In some embodiments the flow cytometer 100 is a sorting flow cytometer, which operates to use the characterizations of the particles generated by the particle analyzer 112 to sort the particles 128 into multiple containers 124.

A sorting flow cytometer includes the sorting system 116, such as including a sort controller 118 and sorting plates 120 and 122. As one example, the sort controller 118 applies a positive, negative, or neutral charge to drops formed from the fluid stream based on the characterizations of the particles. In some embodiments the fluid nozzle is electrically coupled to charge generating electrical circuitry, which is controlled by the sort controller 118. When the drops pass through the charged sorting plates, the drops are deflected based on their respective charges toward one of the containers 124A, 124B, and 124C. A sorting flow cytometer will typically have at least two containers, and may have more than three containers as well. Typically one container is a waste container for unwanted particles or for fluid drops found to be contaminated with one or more particles.

FIG. 2 is a diagram depicting exemplary waveforms 150, 152, 154, and 156 generated by one or more detectors 110 and received by the particle analyzer 112 when one or more particles 128 pass through the light beam 130. The waveforms 152, 154, and 156 are also examples of multi-peak events,

The first plot (A) depicts the typical near Gaussian waveform 150 generated by a single particle. The second plot (B) depicts an example multi-peak waveform 152 generated by another particle. The third plot (C) depicts another example multi-peak waveform 154 generated by two particles. The fourth plot (D) depicts another example multi-peak waveform 156 generated by a single large particle.

When light is detected by one of the detectors 110, the light causes a current to flow and generates a voltage. The resulting output signal forms a waveform, such as the four examples depicted in FIG. 2. The waveforms are provided for graphical illustration, but are typically not actually graphically displayed in or by the flow cytometer. In some embodiments the flow cytometer collects and records data regarding the waveforms that are generated, such as including the maximum height, the width at half-height, and the area. In some embodiments data is collected for signals generated by multiple light sources, and on multiple channels for each light source. Examples of signals detected on different channels include forward scatter, side scatter, and florescence signals. The plots depict the waveforms with a y-axis that represents the voltage, and an x-axis that represents time.

The first plot (A) depicts the typical waveform expected when a particle 128 passes through the light beam 130. When the leading edge of the particle 128 first intersects the light beam, a small amount of light is deflected by the particle. The amount of light deflected increases over time as more of the particle 128 intersects the light beam 130 until the particle is fully within the light beam 130. The peak of the waveform 150 occurs at this point, when the particle 128 is fully within the light beam 130. Then, when the leading edge of the particle 128 exits the light beam 130, the deflected light begins to taper off, and continues until the trailing edge of the particle 128 exits the beam 130.

The inventors have identified three additional waveforms 152, 154, and 156 that are also sometimes detected by the flow cytometer. Those waveforms are shown in the second (B), third (C), and fourth (D) plots.

The second plot (B) depicts a multi-peak waveform 152 that is sometimes generated by a particle 128. In this example, the waveform 152 exhibits two peaks 160 and 162, separated by a valley 164. The peaks are portions of the signal that exhibit a rise and then a fall. Like in the first plot (A), the waveform 152 begins when the leading edge of the particle 128 enters the light beam 130, and rapidly rises until the peak 160 as more of the particle enters the light beam 130. However, in this case once the particle fully enters the light beam, the radiated light detected at the detector reduces, causing a decrease in voltage forming the valley 164. The voltage rises again as the leading edge of the particle 128 reaches the edge of the light beam 130 and the trailing edge becomes fully engulfed forming a second peak 162. The voltage then tapers off as the particle 128 exits the light beam 130. As discussed in more detail herein, the valley 164 exhibits a smooth curved shape. It has been found through experimental observation and mathematical modeling that the multi-peak waveform 152 generated by a single particle is typically generated by particles having a particle width that is less than or approximately equal to the beam width of the light beam 130. In particular, particles having a width approximately equal to the beam width exhibit a waveform having the deepest valley 164, and therefore are most likely to be mischaracterized as two particles.

The third plot (C) depicts another multi-peak waveform 154. In this example, the multi-peak waveform 154 is formed of two particles passing through the light beam 130 in close proximity to each other. The waveform 154 has a first peak 170 and a second peak 172, separated by a valley 174. In this example, each particle generates a waveform having an approximately Gaussian shape, but due to the close proximity of the particles portions of the waveforms overlap resulting in a single waveform.

Although the multi-peak plots (B and C) depict waveforms 152 and 154 having only two peaks, waveforms having additional peaks, such as three or four peaks have also been observed

The fourth plot (D) depicts another multi-peak waveform 156. In this example, the waveform 156 exhibits two peaks 188 and 190, separated by a valley 192. The waveform 156 is an example of a forward scatter waveform. In some embodiments, when a particle passes through the light beam 130, the leading edge of the particle first intersects the light beam 130. The light deflected from the leading edge causes the formation of the first peak 188. As the particle proceeds into the light beam 130, the particle begins to block the forward scattering of light, causing a decrease in detected light, and resulting in the formation of a valley 192 in the waveform 156. The trailing edge of the particle then passes into the light beam, and light again begins to be deflected toward the detector from this trailing edge, resulting in the formation of the second peak 190 in the waveform 156. It has been found through experimental observation and mathematical modeling that the multi-peak waveform 156 generated by a single particle is typically generated by particles having a particle width that is greater than the beam width of the light beam 130.

The presence of the multi-peak waveforms (also sometimes referred to herein as multi-peak events) can lead to several difficulties in properly identifying and characterizing particles.

One difficulty is that the multi-peak waveforms 152 and 156, shown in the second (B) and fourth (D) plots can be incorrectly characterized as two or more separate particles.

Before discussing how this occurs, it is helpful to recognize that the flow cytometer 100 typically includes a variable voltage threshold (sometimes referred to as a trigger threshold, or simply a threshold), which can be set and used to detect particle waveforms. The voltage threshold is preferably set at a voltage greater than a noise floor, to avoid confusing non-particle related noise with a particle waveform. Noise can be present in the system from a variety of sources, including shot noise, dark noise, electrical noise, and other sources. In some embodiments the threshold is a firmware setting and operates to trigger the operation of the firmware when the waveform voltage exceeds the threshold.

When a flow cytometer operates without the benefit of the multi-peak evaluation engine 114, described herein, difficulties can arise in properly characterizing particles. For example, when the voltage threshold is set fairly low, such as at a level 180, shown in the second plot (B), the particle analyzer would properly identify the waveform 152 as generated by a single particle, because it sees only one raising edge and one trailing edge of the signal passing the threshold level 180. However, if the voltage threshold is set higher, such as at a level 182, the particle analyzer would then incorrectly identify the waveform 152 as two separate particles, because it would then see a leading edge and a trailing edge associated with the first peak 160, and a second leading edge and a second trailing edge associated with the second peak 162. The same difficulty arises with the fourth plot (D) regardless of where the threshold is set.

Another difficulty in properly identifying multi-peak waveforms is that multiple particles can be incorrectly characterized as a single particle. In the example shown in the third plot (C), when the voltage threshold is set relatively high, such as at a level 184, the particle analyzer 112 properly identifies the waveform 154 as generated by two particles because of the leading and trailing edges of the two peaks 170 and 172. However, if the voltage threshold is set lower, such as at a level 186, the particle analyzer 112 now incorrectly identifies the waveform 154 as a single particle because it only sees a single leading and trailing edge at that voltage threshold level 186.

Therefore, although lowering the voltage threshold is helpful to reduce the chance of incorrectly mischaracterizing the multi-peak waveform 152 shown in the second plot (B), doing so increases the noise and inconsequential debris detected plus increases the chance of incorrectly mischaracterizing the waveform 154 shown in the third plot (C) as a single particle. Additionally, lowering the voltage threshold does not help with correctly characterizing the multi-peak waveform 156 as a single particle.

As a result, as shown in FIG. 1, some embodiments of the flow cytometer 100 therefore include the multi-peak evaluation engine 114 that operates to identify multi-peak events to properly characterize the one or more particles that generate the multi-peak events.

FIG. 3 is a flow chart illustrating an example method 194 of operating a flow cytometer. In this example the method 194 includes a setup operation 196 and an acquire operation 198.

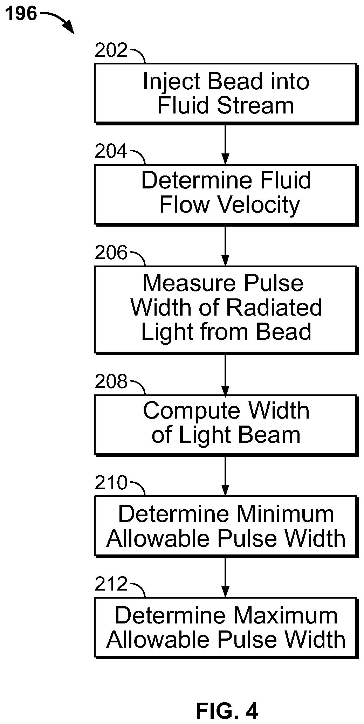

The setup operation 196 is performed to test the current configuration of the flow cytometer 100, and to perform initial calculations. For example, the setup operation 196 can be used to determine a spacing between two or more light beams 130, and to determine a flow velocity of the fluid stream 126 (FIG. 1). An example of the setup operation 196 is illustrated and described in further detail herein with reference to FIGS. 4-6.

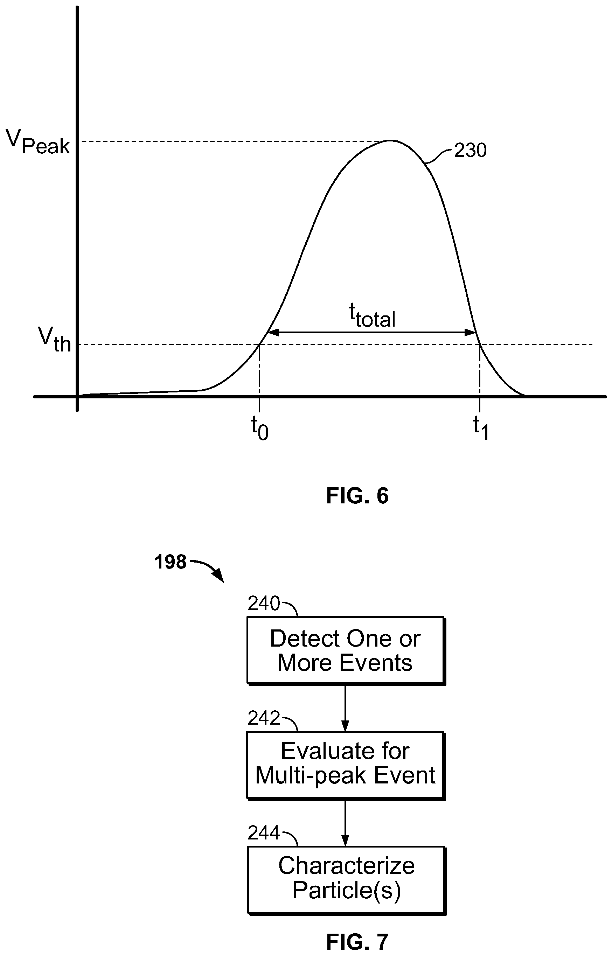

After the setup operation 196 is completed, the acquire operation 198 is performed to process samples using the information collected during the setup operation 196. Examples of the acquire operation 198 are illustrated and described in further detail herein with reference to FIGS. 7-12.

FIG. 4 is a flow chart illustrating an example of the setup operation 196, shown in FIG. 3. In this example, the setup operation 196 includes operations 202, 204, 206, 208, 210, and 212.

The operation 202 is performed to inject a bead into the fluid stream 126. In some embodiments the bead is a known particle having known dimensions such as a quality control bead. An example of a quality control bead is the Ultra Rainbow Fluorescent Particles with a 3.0 to 3.4 um diameter, Part No. URFP-30-2, available from Spherotech, Inc. of Lake Forest, IL.

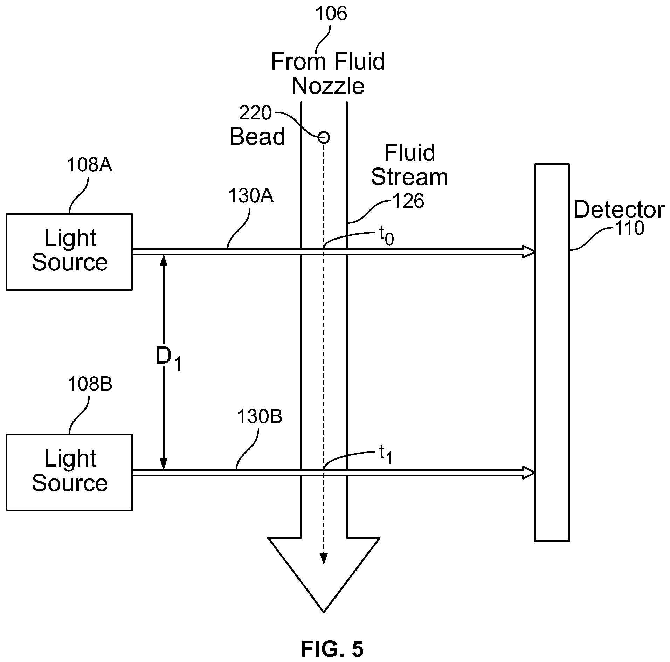

The operation 204 is performed to determine the fluid flow velocity using the bead. An example of operation 204 is illustrated and described in further detail herein with reference to FIG. 5.

The operation 206 is also performed to measure a pulse width of a waveform generated when the bead passes through the light beam 130 (FIG. 1). An example of operation 206 is illustrated and described in further detail with reference to FIG. 6.

The operation 208 is performed after operation 206 to compute the width of the light beam 130. An example of operation 208 is described in further detail with reference to FIG. 6.

The operation 210 is then performed to determine a minimum allowable pulse width at threshold based on the beam width computed in operation 208 and the fluid flow velocity computed in operation 204. An example of operation 210 is described in further detail with reference to FIG. 6.

The operation 212 is performed to determine a maximum allowable pulse width at threshold. In some embodiments the maximum allowable pulse width is computed based at least in part on the maximum allowable particle size. In some embodiments the maximum allowable particle size is a factor of the size of the fluid nozzle 106 (FIG. 1), for example. In general terms, the maximum pulse width that could occur for a particle is the pulse width of the largest particle that can pass through the fluid nozzle 106, which would generate a pulse width which is the sum of the beam width and the diameter of that particle. Therefore, in some embodiments the maximum allowable pulse width at threshold is:

$$\text{maximum allowable pulse width} = A * (\text{maximum particle size} + \text{beam width})$$

and the maximum particle size is:

$$\text{maximum particle size} = B * \text{nozzle size}$$

where A and B are constants. A can be used to convert from baseline to a threshold value, for example. As an example the constant A is in a range from about 0.5 to 1, such as in a range from 0.8 to 0.9. However, A can also be greater than 1 in some embodiments to ensure that no multi-particle events are missed. The constant B is involved due to the fact that the particles that are very close to the nozzle size may still clog the nozzle. Therefore, the maximum particle size is typically less than the nozzle size, such as in a range from about 40% to about 60%, as one example. In some embodiments the constant B is less than 50%.

A flow cytometer 100 often has a fluid nozzle sized in a range from about 50 microns to about 200 microns. Accordingly, a maximum particle size in a range from about 20 to about 120 microns would be appropriate in many embodiments.

The operations 204 and 206 shown in FIG. 4 can be performed in different orders than the illustrated example.

In some embodiments the beam spot width determination is performed once with the quality control bead. Then prior to each acquisition, the minimum allowable pulse width is recalculated using the predetermined beam spot width and current trigger threshold which may change from one acquisition run to the next.

FIG. 5 illustrates a portion of an example flow cytometer 100 including the fluid stream 126 from the fluid nozzle 106, light beam 130A from the light source 108A, light beam 130B from the light source 108B, and detector 110. FIG. 5 also illustrates examples of the operations 202 and 204, shown in FIG. 4.

At operation 202 (FIG. 4), a bead 220 is injected into the fluid stream 126 and flows along with the fluid stream through two or more light beams 130A and 130B. When the bead 220 crosses the light beam 130A, the detector 110 detects radiated light and generates a resulting waveform, such as the waveform 150, shown in the first plot (A) of FIG. 2, containing a pulse with a single peak. The pulse begins when the leading edge of the waveform 150 crosses and exceeds a voltage threshold, and ends when the trailing edge of the waveform 150 crosses and falls below the voltage threshold, for example. As one example, the pulse begins at a time $t_0$.

The bead 220 then continues advancing with the fluid stream 126 and crosses the light beam 130B, at which time the detector 110 (which may be the same or a different detector, such as any of the detectors 110A-C) detects radiated light and generates another waveform (e.g., waveform 150, shown in plot (A) of FIG. 2). In this example, the pulse begins at a time $t_1$.

The operation 204 is then performed to compute the fluid velocity based on these measurements, and based on a known separation (distance D1) between the light sources 108A and 108B. More specifically, the fluid flow velocity ($V_{FLOW}$) can be computed as:

$$V_{FLOW} = D1 / (t_1 - t_0)$$

FIG. 6 is a plot of an example waveform 230 detected upon the passage of the bead 220 through the light beam 130A, shown in FIG. 5. FIG. 6 also illustrates an example of the operation 206, shown in FIG. 4.

Due to the size and composition of the bead 220, the waveform 230 detected by the detector 110 (FIG. 5) has an approximately Gaussian shape.

To measure the pulse width of the pulse in waveform 230, the operation 206 first determines a time $t_0$ at which the waveform 230 exceeds the currently selected voltage threshold ($V_{th}$). The operation 206 then determines a time $t_1$

at which the waveform 230 returns below the voltage threshold. The total pulse width at threshold ($t_{total}$) is calculated as:

$$t_{total} = t_1 - t_0.$$

This total pulse width represents the combination of two factors: (1) the beam width of the light beam 130A, and (2) the diameter of the bead 220, as follows:

$$t_{total} = t_{bw} + t_{pw}$$

where $t_{bw}$ is the beam width at threshold and $t_{pw}$ is the particle width at threshold.

Because the bead has a known diameter, and because the fluid stream 126 flow velocity is known (e.g., operation 204), the pulse width attributable to the beam width alone at threshold (such as with an infinitely small bead / particle) can be computed by:

$$t_{bw} = t_{total} - (\text{effective bead diameter at threshold} / V_{FLOW}).$$

The beam width at threshold ($t_{bw}$) is expressed in terms of time required for an infinitely small particle in the fluid stream 126 to pass through the beam. The beam width itself (in units of distance) at threshold could also be computed based on the known fluid velocity as:

$$\text{effective beam width at threshold} = V_{FLOW} \times t_{bw}.$$

In some embodiments it is desirable to convert the threshold measurements to estimated baseline measurements. One method of converting the values from threshold to baseline is to consider the waveforms as approximating the Gaussian function. Through experimental measurements, the event profile has been found to approximate the Gaussian function from the maximum height down to 1% of the maximum height with an average error of -1.9% and a standard deviation of 3.6%. Below 1% maximum Gaussian height, it has been found that the Gaussian function tails off much more slowly than the actual signal. Therefore, in the following calculations, the maximum pulse width is considered to occur at 1% of the maximum Gaussian height.
The Gaussian function is as follows:

$$f(x) = \text{height\_max} * \exp(- x^2 / (2 * C^2))$$

where C represents the standard deviation.

Once empirically determined that the event waveform is approximately Gaussian, we can solve for C with one pulse width measurement at a known height. So, for f(x) at half height:

$$\text{height\_max} / 2 = \text{height\_max} * \exp(- x^2 / (2 * C^2))$$

solving for C:

$$2 * \ln(\text{height\_max} / (2 * \text{height\_max})) = -(x^2 / C^2)$$

$$C = x / \sqrt{\ln(2) * 2}$$

Since x = half the pulse width, solving for C at pulse width at half height:

$$C = \text{PW\_hh} / (2 * \sqrt{\ln(2) * 2})$$

$$C = PW\_hh / 2.35482$$

Similarly, solving for C at pulse width at 1% height:

$$C = PW\_hh / 6.06971$$

Therefore, the full pulse width from a measured pulse width at a half-height trigger threshold:

$$PW\_full = (PW\_hh / 2.35482) * 6.06971$$

From this discussion, the effective bead diameter at half-height trigger threshold is:

$$effective\ bead\ diameter = bead\ diameter * 2.35482 / 6.06971$$

Once the beam width at threshold ($t_{bw}$) has been computed, in some embodiments the operation 210 is performed to determine a minimum allowable pulse width to be used by the multi-peak evaluation engine 114, as discussed in further detail herein. In some embodiments the minimum allowable pulse width is based on the understanding that the multi-peak waveform 152, shown in the second plot (B) in FIG. 2, is most prominent when the particle size is approximately equal to the beam width, but can also be present when the particle size is somewhat less than beam width. In some embodiments the minimum allowable pulse width is computed as:

$$minimum\ allowable\ pulse\ width = D\ x\ (2\ x\ t_{bw}).$$

where D is in a range from 0.5 to 1, and in some embodiments is in a range from 0.8 to 0.9.

In other words, for a multi-peak event, the largest combined pulse widths of the multiple peaks that should be expected from a single particle occurs in the case when a particle has a diameter equal to the beam width, in which case the pulse width at threshold is "$2\ x\ t_{bw}$"). Therefore, any single pulse width that is less than the minimum allowable pulse width is likely from two or more small particles in close proximity (plot (C) FIG. 2). Any single pulse width that is greater than the minimum allowable pulse width but less than the maximum allowable pulse width is likely either multiple particles in close proximity (plot (C) FIG. 2) or a single particle with a multi-peak waveform (plot (B) FIG. 2), in which case further evaluation can be performed as described herein.

Referring briefly back to FIG. 3, once the setup operation 196 is complete, the flow cytometer 100 is ready to begin the acquire operation 198. Examples of the acquire operation 198 are illustrated and described with reference to FIGS. 7-14.

FIG. 7 is a flow chart illustrating an example of the acquire operation 198, shown in FIG. 3. In this example, the acquire operation 198 includes operations 240, 242, and 244.

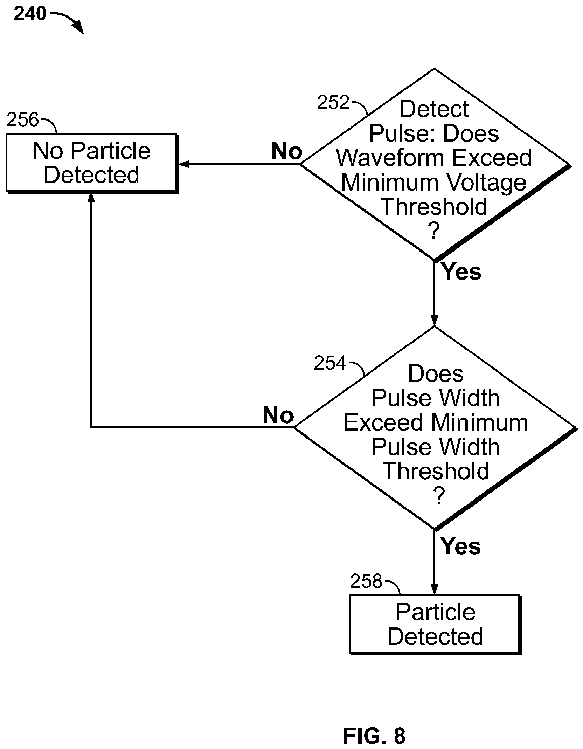

The operation 240 is performed to detect one or more events. An example of the operation 240 is illustrated and described in further detail with reference to FIG. 8.

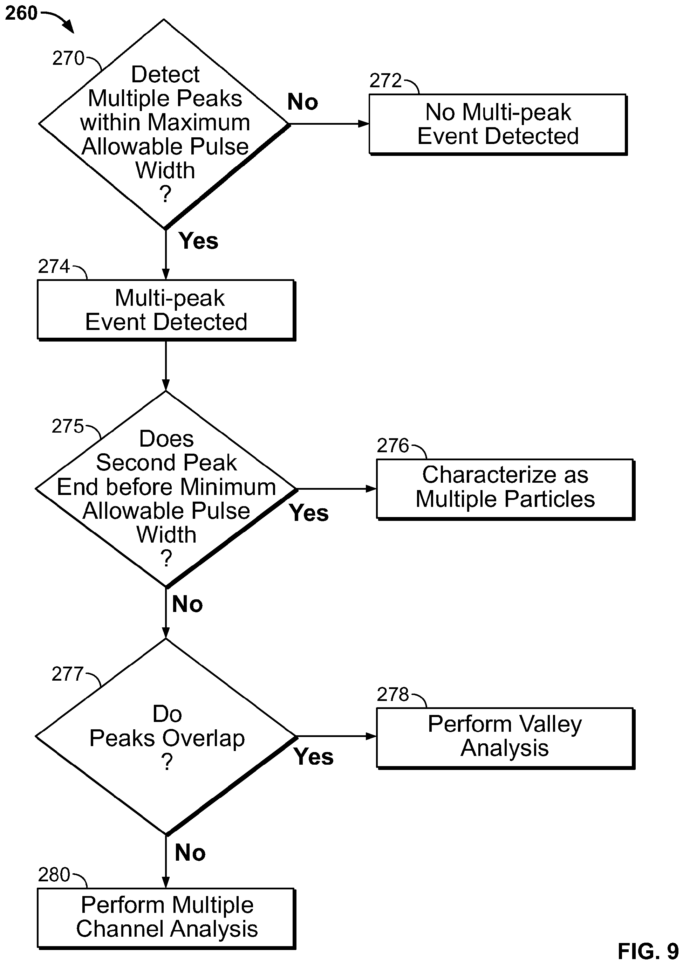

The operation 242 is performed to evaluate for a multi-peak event. An example of the operation 242 is illustrated and described in further detail with reference to FIG. 9.

The operation 244 is performed to characterize the one or more particles. An example of the operation 244 is illustrated and described in further detail with reference to FIGS. 9-12

FIG. 8 is a flow chart illustrating an example of the operation 240 of detecting one or more events, shown in FIG. 7. In this example, the operation 240 includes operations 252, 254, 256, and 258.

The operation 252 is performed to detect a pulse in the detected waveform. For example, the operation 252 is performed to determine whether the waveform exceeds the minimum voltage threshold ($V_{th}$). As discussed herein, a minimum voltage threshold can be used to ignore noise that may be present, for example. If the waveform exceeds the minimum voltage threshold, the operation 240 proceeds to operation 254. Otherwise, if the waveform does not exceed the minimum voltage threshold, then no particle is detected (256) and the operation 240 continues monitoring for the next pulse (operation 252). Although operation 256 is shown as a separate operation from operation 252, in some embodiments the operation 256 is a state of operation 252 during which no pulse has been detected.

The operation 254 is performed to determine whether a pulse width of the detected pulse exceeds a minimum pulse width threshold. The minimum pulse width threshold similarly acts to ignore non-particle noise, such as a voltage spike having a very short pulse width (e.g., a pulse width much less than the beam width ($t_{bw}$), for example). If the pulse width exceeds the minimum pulse width threshold, the operation 258 is performed to determine that at least one particle has been detected. Otherwise, the operation 256 is performed to determine that a particle has not been detected.

FIG. 9 is a flow chart illustrating an example method 260 of evaluating a waveform for a multi-peak event. FIG. 9 is also an example of the operation 242, shown in FIG. 7. In this example, the method 260 includes operations 270, 272, 274, 275, 276, 277, 278, and 280.

The operation 270 is performed to determine whether multiple peaks are present in the waveform, within a maximum allowable pulse width. A peak can be detected as a rise and fall of the waveform, such as an increase in voltage followed by a decrease in voltage. In some embodiments the rise and fall must be greater than a predetermined magnitude in order to distinguish from noise, for example. In some embodiments a peak is identified as a portion of the waveform including a local maximum. In some embodiments peaks and valleys in the waveform can be identified as points on the waveform in which the derivative is zero.

In some embodiments the operation 270 determines whether a falling edge of a second detected peak passes through the voltage threshold ($V_{th}$) before the maximum allowable pulse width has elapsed from the time that a first peak begins (e.g., from the time that the leading edge of the first peak exceeds the voltage threshold). If not, operation 272 is performed to determine that there is no multi-peak event present in the waveform and to characterize the particle as a single particle. If multiple peaks are present, then the method 260 determines that a multi-peak event is present in the waveform in operation 274 and that further evaluation by the multi-peak evaluation engine 114 (FIG. 1) is appropriate.

The operation 275 is then performed to determine whether the second peak ends before the minimum allowable pulse width. If so, then it is determined that the multi-peak waveform was generated by multiple closely spaced and small sized particles, such as shown in plot (C) of FIG. 2, and is characterized in operation 276 as multiple particles. If the second peak does not end before the minimum allowable pulse width, then the method 260 proceeds with operation 277 for further evaluation.

The operation 277 is performed to determine whether the multiple peaks overlap. For example, in some embodiments the operation 277 determines whether the waveform falls below threshold between the multiple peaks. If not, the operation 277 determines that the peaks do overlap, and operation 278 is performed. If so, then operation 277 determines that the peaks do not overlap, and operation 280 is performed.

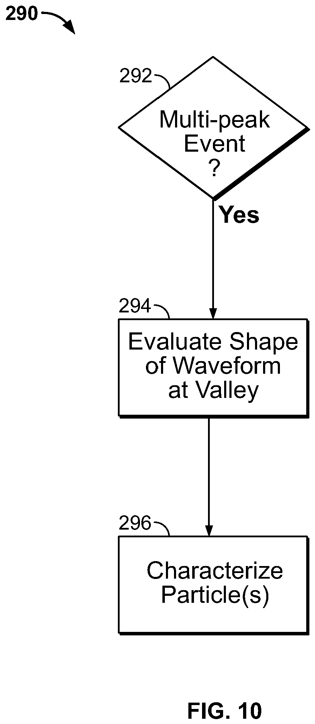

The operation 278 performs a valley analysis on the waveform when the two peaks overlap. The valley analysis operates to differentiate a single particle from multiple particles by evaluating a shape of the valley in the waveform between two adjacent peaks. Examples of the valley analysis are illustrated and described in more detail with reference to FIGS. 10-12.

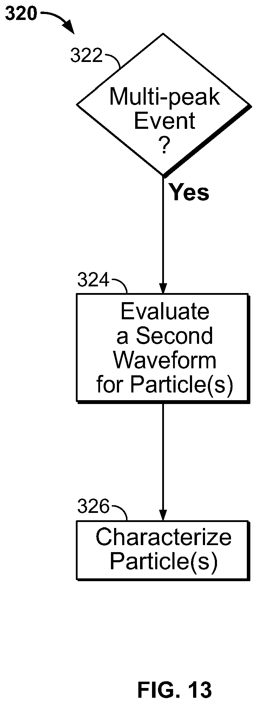

If the operation 277 determines that the peaks don't overlap, then it is determined that the multi-peak waveform is either a single large particle, such as shown in plot (D) of FIG. 2, or is two separate particles both of which have a waveform such as the plot (A) of FIG. 2. In order to determine which one is present, the operation 280 performs a multiple channel analysis. The multiple channel analysis involves the use of a waveform from at least one other channel (e.g., another of the detectors 110A-C) to determine whether the waveform is associated with a single particle or multiple particles. Examples of the multiple channel analysis are illustrated and described in more detail with reference to FIGS. 13-14.

FIG. 10 is a flow chart illustrating a method 290 of evaluating a multi-peak event using a valley analysis. In this example, the method 290 includes operation 292, 294, and 296. In some embodiments the method 290 is an example of the operation 278, shown in FIG. 9, which performs a valley analysis.

The operation 292 is performed to determine whether a multi-peak event is present in the waveform. An example of the operation 292 includes operations 270, 275, and 277 shown in FIG. 9. If a multi-peak event is, or has already been, detected then the method 290 proceeds with operation 294.

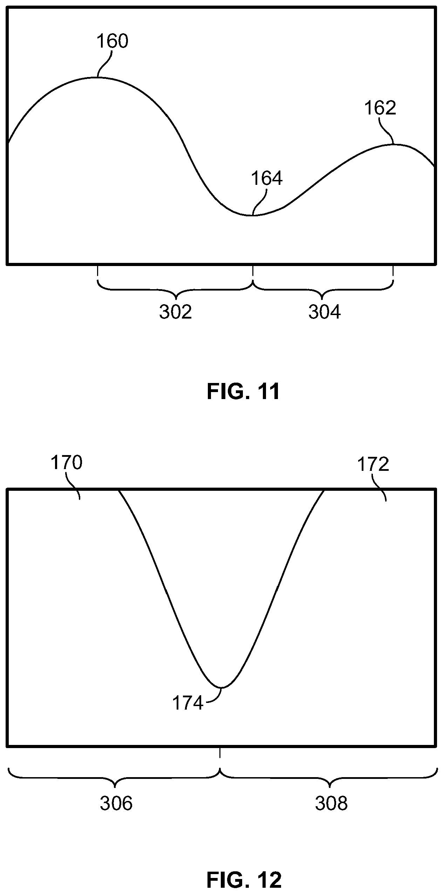

The operation 294 is performed to evaluate the shape of the waveform at a valley. For example, in some embodiments the operation 294 evaluates a sharpness of the valley between two adjacent peaks is pointed or curved. A gently curved valley is generated by a single particle, such as the waveform shown in plot (B) of FIG. 2, which shows a curved valley 164. A pointed valley is generated by two separate particles, such as the waveform shown in plot (C) of FIG. 2, which shows a pointed valley 174. Additional examples are shown in FIGS. 11 and 12.

The operation 296 is performed to characterize the one or more particles based on the result of operation 294. If determined that the valley is gently curved, then the operation 296 determines that the waveform has been generated by a single particle. If determined that the valley is pointed, then the operation 296 determines that the waveform has been generated by multiple particles. In some embodiments the determination of whether a valley is gently curved or pointed is based on a comparison with a threshold value. For example, the value of (an absolute value of) a first derivative of the waveform in the region of the valley can be compared with a threshold value to determine whether the valley is gently curved or pointed. If the value exceeds the threshold, then the waveform is pointed, and if it does not, then the waveform has a gentle curve.

In some embodiments the threshold is determined during the setup phase. In other embodiments the threshold is determined on an event-by-event basis. For example, the threshold can be determined by measuring the derivative of the initial leading and/or trailing edge and multiplying that by a constant (e.g., 0.9) for comparison to the between-peaks derivative. In some embodiments the second derivative is also or alternatively evaluated.

In some embodiments the second derivative is evaluated to determine whether a rate of change of the rate of change of the waveform within the valley of the waveform exceeds a threshold value. In another possible embodiment, a width of the waveform is evaluated at a predetermined location adjacent the midpoint of the valley. For example, a narrow width represents a pointed curve and a wider width represents a gentle curve.

FIG. 11 is a diagram illustrating an example of a gently curved valley 164 between adjacent peaks 160 and 162 of a multi-peak waveform. In this example, the valley 164 is formed by a trailing edge 302 of the first peak 160 and a leading edge 304 of the second peak 162. FIG. 11 is also an enlarged view of a portion of the waveform 152 shown in plot (B) of FIG. 2.

In this example, the trailing edge 302 and the leading edge 304 meet to form a gently curved portion of the waveform. In some embodiments the location of the valley is estimated as being a midpoint between the peak 160 and the peak 162, or alternatively as a midpoint between a leading edge of peak 160 and a trailing edge of peak 162.

It has been found that the valley 164 in the waveform from a single particle exhibits a gentle curve, as compared with the pointed valley shown in FIG. 12.

FIG. 12 is a diagram illustrating an example of a pointed valley 174 between adjacent peaks 170 and 172 of a multi-peak waveform. In this example, the valley 174 is formed by a trailing edge 306 of the first peak 170 and a leading edge 308 of the second peak 172. FIG. 12 is also an enlarged view of a portion of the waveform 154 shown in plot (C) of FIG. 2.

In this example, the trailing edge 306 and the leading edge 308 meet to form a more sharply pointed valley 174, as compared with the gently curved valley 164, shown in FIG. 11. In some embodiments the location of the valley is estimated as being at the midpoint, as discussed above.

It has been found that the valley 174 in the waveform from multiple particles exhibits a more sharply pointed curve, as compared with valley 164. Although the peaks 170 and 172 associated with each particle approximate the Gaussian function, as discussed herein, the peaks 170 and 172 both contribute to the waveform in the overlapping portion, resulting in the addition of the waveforms at the valley 174 and the formation of a pointed curve at the intersection.

FIG. 13 is a flow chart illustrating a method 320 of evaluating a multi-peak event using a multiple channel analysis. In this example, the method 320 includes operation 322, 324, and 326. In some embodiments the method 320 is an example of the operation 280, shown in FIG. 9, which performs the multiple channel analysis.

The operation 322 is performed to determine whether a multi-peak event is present in the waveform. An example of the operation 322 includes operations 270, 275, and 277, shown in FIG. 9. If a multi-peak event is, or has already been, detected then the method 320 proceeds with operation 324.

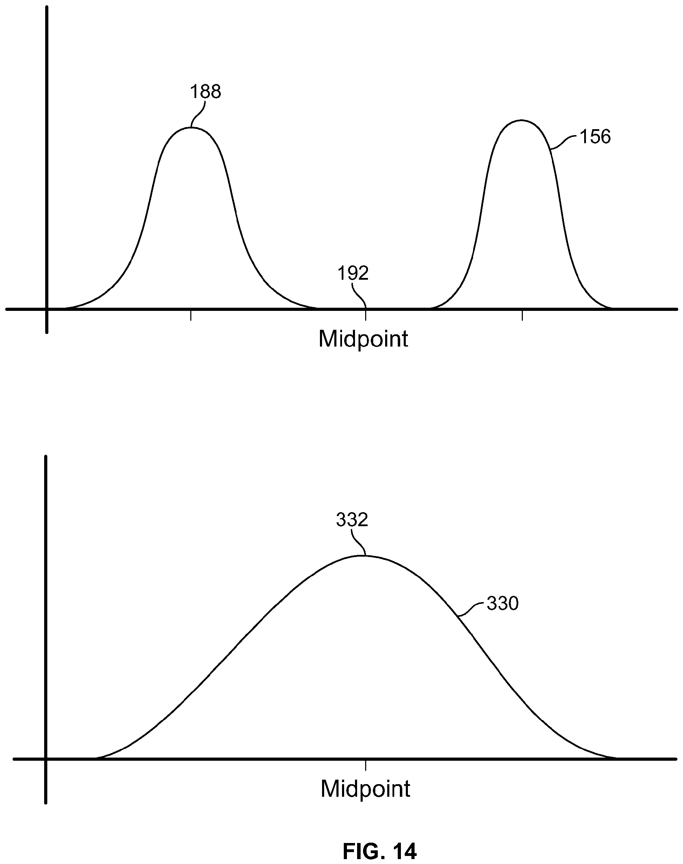

The operation 324 is performed to evaluate a second waveform for the particle(s) under evaluation. For example, it has been found that even when a multi-peak waveform is generated by a single particle as detected in one channel of the flow cytometer detector, such as in the forward scatter signal, other channels may not exhibit the same multi-peak waveform, and may instead exhibit the approximately Gaussian waveform as shown in plot (A) of FIG. 2. Accordingly, in order to differentiate a multi-peak waveform as one generated by a single particle and by one generated by two separate particles, a waveform of a second channel can be evaluated to determine whether the multi-peak waveform has been generated by one particle or by multiple particles. An example is illustrated and described in further detail with reference to FIG. 14.

The operation 326 is performed to characterize the one or more particles based on the result of operation 324. If determined that the second channel has a single peak, then the operation 326 determines that the waveform has been generated by a single particle. If determined that the second channel has multiple peaks, then the operation 326 determines that the waveform has been generated by multiple particles.

FIG. 14 illustrates waveforms 156 and 330 generated by multiple channels of the detectors 110 (FIG. 1) of the flow cytometer. In this example, the waveform 156 is a forward scatter signal and the waveform 330 is one of a side scatter signal and a florescence signal.

This example illustrates the waveforms 156 and 330 that are generated on multiple channels when a single particle is under evaluation. In this example, the waveform 156 exhibits two distinct and spaced peaks 188 and 190, which are separated by a valley 192. Because of the multiple, non-overlapping peaks, the multi-peak evaluation engine 114 (FIG. 1) operates to evaluate the waveform 330 on a second channel to determine whether the multiple peaks are generated by a single particle or by multiple particles. In some embodiments, the operation determines a magnitude of the waveform 330 at a midpoint (i.e., a time midway between peaks 188 and 190). In this example, the waveform has a peak 332 at the midpoint. As a result, the multi-peak waveform 156 is determined to be generated by a single particle. If instead the waveform 330 had no signal, or a low signal below a threshold value at the midpoint, then the multi-peak event is determined to be generated by multiple particles.

In some embodiments, in addition to determining whether a waveform is generated by a single particle or by multiple particles, the multi-peak evaluation engine 114 can also operate to modify waveform data that is stored regarding the waveform. In some embodiments the flow cytometer stores data regarding the detected waveforms including the maximum height, the width at half-height, and the area. Due to the multi-peak effects discussed herein, the actual waveforms do not always accurately reflect the characteristics of the respective particles. Therefore, the multi-peak evaluation engine 114 operates to estimate and save the appropriate data for each particle.

For example, because the waveform 156 shown in FIG. 14 has been determined to be generated by a single particle, the actual characteristics of the particle are equivalent to a waveform having approximately a Gaussian waveform, rather than the multiple peaks that were detected. Accordingly, the multi-peak evaluation engine can estimate the appropriate waveform based on the locations and magnitudes of the peaks 188 and 190, for example. In another possible embodiment data from other channels can be used to estimate the appropriate waveform. However, in either case it would be processor intensive to compute a complete waveform, so in some embodiments the multi-peak evaluation engine 114 does not generate a complete waveform but rather computes only the missing data, such as the adjusted maximum height and the adjusted area. As one example, the adjusted maximum height can be computed as a multiple of an average height of the peaks 188 and 190, and the adjusted area estimated as a rectangle having a width equal to a width of the pulse including the peaks 188 and 190 and a computed height. In some embodiments the computed height is a function of the depth of the valley 192, where a deeper valley results in computing a greater height, representing a larger portion of the waveform that has not been detected. The adjusted width is the measured distance between the leading edge of peak 188 and the trailing edge of peak 190.

In addition to, or as an alternative to the evaluation by the multi-peak evaluation engine, some embodiments address the multi-peak issues in other ways. One example is to utilize an electronic filter, an optical filter, and/or optical masks.

**Claims**

1. A method of characterizing particles using a flow cytometer (100), the method comprising:

   passing one or more particles in a fluid stream (126) through a light beam (130, 130A) of the flow cytometer (100);
   detecting radiated light as the one or more particles in a fluid stream (126) pass through the light beam (130, 130A) and generating a waveform based on the detected radiated light; and
   determining that the waveform is a multi-peak waveform, the method being **characterised in that** it comprises characterizing the one or more particles by evaluating the multi-peak waveform to distinguish between a single particle and multiple particles.

2. The method of claim 1, wherein determining that the waveform is a multi-peak waveform comprises comparing a magnitude of the waveform with one or more threshold values to identify at least two peaks in the waveform within a predetermined period of time.

3. The method of claim 2, wherein the waveform exceeds a threshold value at least twice.

4. The method of claim 2, wherein the first peak exceeds a first threshold value and the second peak exceeds a second threshold value.

5. The method of claim 2, wherein determining that the waveform is a multi-peak waveform further comprises identifying a valley between the at least two peaks.

6. The method of claim 2, wherein the predetermined period of time is a maximum allowable pulse width, and wherein the maximum allowable pulse width is computed as a function of a size of a nozzle (106) that generates the fluid stream (126), and function of a width of the light beam (130, 130A), and determining the width of the light beam (130, 130A) comprises:

   passing a bead (220) of a known size in the fluid stream (126) through the light beam (130A) and through a second light beam (130B);
   detecting radiated light as the bead (220) passes through the light beam (130A);
   computing a first length of time for the bead (220) to pass through the light beam (130A) based on the radiated light detected as the bead (220) passed through the light beam (130A);
   computing a velocity of the fluid stream (126) from a length of time for the bead (220) to pass from the light beam (130A) to the second light beam (130B), and from a known distance between the light beam (130A) and the second light beam (130B); and

computing a width of the light beam (130A) from the velocity of the fluid stream (126) and the first length of time.

7. The method of claim 1, wherein detecting radiated light and generating the waveform comprises generating a voltage waveform using a photomultiplier detector (110, 110A, 110B, 110C).

8. The method of claim 1, wherein evaluating the multi-peak waveform comprises comparing a width of the multi-peak waveform with a minimum allowable pulse width and characterizing the one or more particles as multiple particles when the width of the multi-peak waveform is less than the minimum allowable pulse width.

9. The method of claim 8, wherein the minimum allowable pulse width is in a range from 0.8 x (2 x beam width at threshold) and 0.9 times (2 x beam width at threshold).

10. The method of claim 1, wherein if a width of the multi-peak waveform is more than a minimum allowable pulse width and peaks of the multi-peak waveform do not overlap, evaluating the multi-peak waveform comprises evaluating a shape of a valley of the multi-peak waveform.

11. The method of claim 10, wherein evaluating a shape of the valley comprises classifying the shape of the valley as one of: a gentle curve and a sharp curve, and characterizing the one or more particles as a single particle when classified as a gentle curve and as multiple particles when classified as a sharp curve.

12. The method of claim 1, wherein if a width of the multi-peak waveform is more than a minimum allowable pulse width and peaks of the multi-peak waveform do not overlap, evaluating the multi-peak waveform further comprises performing a multiple channel analysis including evaluating a second waveform associated with the one or more particles.

13. A flow cytometer (100) comprising:

a fluid nozzle (106) configured to generate a fluid stream (126), wherein the fluid stream (126) includes particles therein;
a light source (108, 108A, 108B) configured to generate a light beam (130, 130A, 130B) to illuminate the fluid stream (126) and the particles;
a detector (110, 110A, 110B, 110C) configured to detect radiated light from the fluid stream (126) and to generate waveforms associated with the particles; and
at least one processing device configured to identify multi-peak waveforms, the flow cytometer being **characterised in that** the at least one processing device is configured to

evaluate the multi-peak waveforms to identify at least some of the multi-peak waveforms as being associated with single particles, and at least some other of the multi-peak waveforms as being associated with multiple particles; and
characterize the particles as being either single particles or multiple particles based on the evaluation.

14. The flow cytometer (100) of claim 13, further comprising a sorting system (116) including a sort controller (118) programmed to make sort decisions using the characterizations of the particles.

15. The flow cytometer (100) of claim 13, wherein the detector (110A) is positioned to detect forward scattered light, and further comprising a second detector (110B) positioned to detect one of: side scattered light and fluorescent light, and wherein the evaluation of the multi-peak waveforms further comprises evaluating a waveform generated by the second detector (110B).

**Patentansprüche**

1. Verfahren zum Beschreiben von Partikeln unter Verwendung eines Durchflusszytometers (100), wobei das Verfahren Folgendes umfasst:

Hindurchgehen eines oder mehrerer Partikel in einem Fluidstrom (126) durch einen Lichtstrahl (130, 130A) des Durchflusszytometers (100);

Erfassen ausgestrahlten Lichts, sobald der eine oder die mehreren Partikel in einem Fluidstrom (126) durch den Lichtstrahl (130, 130A) hindurchgehen und Erzeugen einer Wellenform basierend auf dem erfassten ausgestrahltem Licht; und

Bestimmen, dass die Wellenform eine Mehrfachspitzenwellenform ist, wobei das Verfahren **dadurch gekennzeichnet ist, dass** es Folgendes umfasst:

Beschreiben des einen oder der mehreren Partikel durch Auswerten der Mehrfachspitzenwellenform, um zwischen einem einzelnen Partikel und vielen Partikeln zu unterscheiden.

**2.** Verfahren nach Anspruch 1, wobei das Bestimmen, dass die Wellenform eine Mehrfachspitzenwellenform ist, das Vergleichen eines Ausschlags der Wellenform mit einem oder mehreren Grenzwerten umfasst, um mindestens zwei Spitzen in der Wellenform innerhalb einer vorbestimmten Zeitspanne zu identifizieren.

**3.** Verfahren nach Anspruch 2, wobei die Wellenform einen Grenzwert mindestens zweimal überschreitet.

**4.** Verfahren nach Anspruch 2, wobei die erste Spitze einen ersten Grenzwert überschreitet und die zweite Spitze einen zweiten Grenzwert überschreitet.

**5.** Verfahren nach Anspruch 2, wobei das Bestimmen, dass die Wellenform eine Mehrfachspitzenwellenform ist, überdies das Identifizieren eines Tals zwischen den mindestens zwei Spitzen umfasst.

**6.** Verfahren nach Anspruch 2, wobei die vorbestimmte Zeitspanne eine maximal zulässige Impulsbreite ist und wobei die maximal zulässige Impulsbreite in Abhängigkeit von einer Größe einer Düse (106), die den Fluidstrom (126) erzeugt, und in Abhängigkeit von einer Breite des Lichtstrahls (130, 130A) berechnet wird, und wobei das Bestimmen der Breite des Lichtstrahls (130, 130A) Folgendes umfasst:

Hindurchgehen eines Kügelchens (220) einer bekannten Größe im Fluidstrom (126) durch den Lichtstrahl (130A) und durch einen zweiten Lichtstrahl (130B);
Erfassen ausgestrahlten Lichts, sobald das Kügelchen (220) durch den Lichtstrahl (130A) hindurchgeht;
Berechnen einer ersten Zeitlänge, die das Kügelchen (220) benötigt, um durch den Lichtstrahl (130A) hindurchzugehen, basierend auf dem ausgestrahlten Licht, das erfasst wurde, als das Kügelchen durch den Lichtstrahl (130A) hindurchging;
Berechnen einer Geschwindigkeit des Fluidstroms (126) aus einer Zeitlänge, die das Kügelchen (220) benötigt, um von dem Lichtstrahl (130A) zu dem zweiten Lichtstrahl (130B) zu gelangen, und aus einem bekannten Abstand zwischen dem Lichtstrahl (130A) und dem zweiten Lichtstrahl (130B); und
Berechnen einer Breite des Lichtstrahls (130A) aus der Geschwindigkeit des Fluidstroms (126) und der ersten Zeitlänge.

**7.** Verfahren nach Anspruch 1, wobei das Erfassen ausgestrahlten Lichts und Erzeugen der Wellenform das Erzeugen einer Spannungswellenform unter Verwendung eines Photoelektronenvervielfacher-Detektors (110, 110A, 110B, 110C) umfasst.

**8.** Verfahren nach Anspruch 1, wobei das Auswerten der Mehrfachspitzenwellenform Folgendes umfasst: das Vergleichen einer Breite der Mehrfachspitzenwellenform mit einer minimal zulässigen Impulsbreite und Beschreiben des einen oder der mehreren Partikel als viele Partikel, wenn die Breite der Mehrfachspitzenwellenform kleiner als die minimal zulässige Impulsbreite ist.

**9.** Verfahren nach Anspruch 8, wobei die minimal zulässige Impulsbreite in einem Bereich von $0{,}8 \times (2 \times$ Strahlbreite am Grenzwert) und $0{,}9 \times (2 \times$ Strahlbreite am Grenzwert) liegt.

**10.** Verfahren nach Anspruch 1, wobei, falls eine Breite der Mehrfachspitzenwellenform größer als eine minimal zulässige Impulsbreite ist und Spitzen der Mehrfachspitzenwellenform sich nicht überlappen, das Auswerten der Mehrfachspitzenwellenform das Auswerten einer Form eines Tals der Mehrfachspitzenwellenform umfasst.

**11.** Verfahren nach Anspruch 10, wobei das Auswerten einer Form des Tals Folgendes umfasst: Klassifizieren der Form des Tals als entweder eine weite Kurve oder eine enge Kurve und Beschreiben des einen oder der mehreren Partikel als ein einzelnes Partikel, wenn die Kurve als weit klassifiziert wurde, und als viele Partikel, wenn die Kurve als eng klassifiziert wurde.

**12.** Verfahren nach Anspruch 1, wobei, falls eine Breite der Mehrfachspitzenwellenform größer als eine minimal zulässige Impulsbreite ist und Spitzen der Mehrfachspitzenwellenform sich nicht überlappen, das Auswerten der Mehrfachspitzenwellenform überdies das Durchführen einer Mehrkanalanalyse umfasst, umfassend das Auswerten einer zweiten Wellenform, die mit dem einen oder den mehreren Partikeln in Zusammenhang steht.

**13.** Durchflusszytometer (100), umfassend:

eine Fluiddüse (106), die ausgestaltet ist, einen Fluidstrom (126) zu erzeugen, wobei der Fluidstrom (126) Partikel in sich umfasst;
eine Lichtquelle (108, 108A, 108B), die ausgestaltet ist, einen Lichtstrahl (130, 130A, 130B) zu erzeugen, um den Fluidstrom (126) und die Partikel zu beleuchten;
einen Detektor (110, 110A, 110B, 110C), der ausgestaltet ist, vom Fluidstrom (126) ausgestrahltes Licht zu erfassen und Wellenformen zu erzeugen, die mit den Partikeln in Zusammenhang stehen; und
mindestens eine Verarbeitungsvorrichtung, die ausgestaltet ist, Mehrfachspitzenwellenformen zu identifizieren, wobei das Durchflusszytometer **dadurch gekennzeichnet ist, dass** die mindestens eine Verarbeitungsvorrichtung für Folgendes ausgestaltet ist:

Auswerten der Mehrfachspitzenwellenformen, um zumindest einige der Mehrfachspitzenwellenformen als mit einzelnen Partikeln in Zusammenhang stehend und zumindest einige andere der Mehrfachspitzenwellenformen als mit vielen Partikeln in Zusammenhang stehend zu identifizieren; und
Beschreiben der Partikel als entweder einzelne Partikel oder viele Partikel, basierend auf der Auswertung.

**14.** Durchflusszytometer (100) nach Anspruch 13, überdies umfassend ein Sortiersystem (116), das ein Sortiersteuer- bzw. -regelgerät (118) umfasst, das programmiert ist, Sortierentscheidungen unter Verwendung der Beschreibungen der Partikel zu treffen.

**15.** Durchflusszytometer (100) nach Anspruch 13, wobei der Detektor (110A) positioniert ist, vorwärts gestreutes Licht zu erfassen, und überdies umfassend einen zweiten Detektor (110B), der positioniert ist, entweder seitlich gestreutes Licht oder Fluoreszenzlicht zu erfassen, und wobei die Auswertung der Mehrfachspitzenwellenformen überdies das Auswerten einer Wellenform umfasst, die durch den zweiten Detektor (110B) erzeugt wird.

**Revendications**

**1.** Procédé de caractérisation de particules utilisant un cytomètre en flux (100), le procédé comportant :

le passage d'une ou de plusieurs particules dans un écoulement de fluide (126) à travers un faisceau de lumière (130, 130A) du cytomètre en flux (100) ;
la détection de lumière irradiée tandis que la ou les particules dans un écoulement de fluide (126) passent à travers le faisceau de lumière (130, 130A) et la production d'une forme d'onde basée sur la lumière irradiée détectée ; et
la détermination que la forme d'onde est une forme d'onde multi-pic, le procédé étant **caractérisé en ce qu'**il comporte
la caractérisation de la ou des particules par évaluation de la forme d'onde multi-pic afin de distinguer entre une particule unique et de multiples particules.

**2.** Procédé selon la revendication 1, dans lequel la détermination que la forme d'onde est une forme d'onde multi-pic comporte la comparaison d'une amplitude de la forme d'onde à une ou plusieurs valeurs seuil afin d'identifier au moins deux pics dans la forme d'onde au sein d'une période prédéfinie.

**3.** Procédé selon la revendication 2, dans lequel la forme d'onde dépasse une valeur seuil au moins deux fois.

**4.** Procédé selon la revendication 2, dans lequel le premier pic dépasse une première valeur seuil et le second pic dépasse une seconde valeur seuil.

**5.** Procédé selon la revendication 2, dans lequel la détermination que la forme d'onde est une forme d'onde multi-pic comporte en outre l'identification d'un creux entre les au moins deux pics.

**6.** Procédé selon la revendication 2, dans lequel la période prédéfinie est une largeur d'impulsion admissible maximum et dans lequel la largeur d'impulsion admissible maximum est calculée en fonction d'une taille d'une buse (106) qui produit l'écoulement de fluide (126) et en fonction d'une largeur du faisceau de lumière (130, 130A) et la détermination de la largeur du faisceau de lumière (130, 130A) comporte :

le passage d'une bille (220) d'une taille connue dans l'écoulement de fluide (126) à travers le faisceau de lumière (130A) et à travers un second faisceau de lumière (130B) ;
la détection de la lumière irradiée tandis que la bille (220) passe à travers le faisceau de lumière (130A) ;
le calcul d'une première durée pour que la bille (220) passe à travers le faisceau de lumière (130A) sur la base de la lumière irradiée détectée tandis que la bille (220) est passée à travers le faisceau de lumière (130A) ;
le calcul d'une vitesse de l'écoulement de fluide (126), à partir d'une durée pour que la bille (220) passe du faisceau de lumière (130A) au second faisceau de lumière (130B) et à partir d'une distance connue entre le faisceau de lumière (130A) et le second faisceau de lumière (130B) ; et
le calcul d'une largeur du faisceau de lumière (130A) à partir de la vitesse de l'écoulement de fluide (126) et de la première durée.

**7.** Procédé selon la revendication 1, dans lequel la détection de la lumière irradiée et la production de la forme d'onde comprennent la production d'une forme d'onde de tension à l'aide d'un détecteur photomultiplicateur (110, 110A, 110B, 110C).

**8.** Procédé selon la revendication 1, dans lequel l'évaluation de la forme d'onde multi-pic comporte la comparaison d'une largeur de la forme d'onde multi-pic à une largeur d'impulsion admissible minimum et la caractérisation de la ou des particules en tant que particules multiples lorsque la largeur de la forme d'onde multi-pic est inférieure à la largeur d'impulsion admissible minimum.

**9.** Procédé selon la revendication 8, dans lequel la largeur d'impulsion admissible minimum est comprise dans une plage allant de 0,8 x (2 x la largeur de faisceau au seuil) et 0,9 fois (2 x la largeur de faisceau au seuil).

**10.** Procédé selon la revendication 1, dans lequel, si une largeur de la forme d'onde multi-pic est supérieure à une largeur d'impulsion admissible minimum et que des pics de la forme d'onde multi-pic ne se chevauchent pas, l'évaluation de la forme d'onde multi-pic comporte l'évaluation d'une forme d'un creux de la forme d'onde multi-pic.

**11.** Procédé selon la revendication 10, dans lequel l'évaluation d'une forme du creux comporte la classification de la forme du creux en tant qu'un élément parmi : une courbe douce et une courbe prononcée, et la caractérisation de la ou des particules en tant que particule unique lorsqu'elle est classifiée en tant que courbe douce et en tant que particules multiples lorsqu'elle est classifiée en tant que courbe prononcée.

**12.** Procédé selon la revendication 1, dans lequel, si une largeur de la forme d'onde multi-pic est supérieure à une largeur d'impulsion admissible minimum et que des pics de la forme d'onde multi-pic ne se chevauchent pas, l'évaluation de la forme d'onde multi-pic comporte en outre la réalisation d'une analyse de canaux multiples incluant l'évaluation d'une seconde forme d'onde associée à la ou aux particules.

**13.** Cytomètre en flux (100) comportant :

une buse de fluide (106) conçue pour produire un écoulement de fluide (126), dans lequel l'écoulement de fluide (126) inclut des particules en son sein ;
une source de lumière (108, 108A, 108B) conçue pour produire un faisceau de lumière (130, 130A, 130B) afin d'éclairer l'écoulement de fluide (126) et les particules ;
un détecteur (110, 110A, 110B, 110C) conçu pour détecter de la lumière irradiée à partir de l'écoulement de fluide (126) et pour produire des formes d'onde associées aux particules ; et
au moins un dispositif de traitement conçu pour identifier des formes d'onde multi-pics, le cytomètre en flux étant **caractérisé en ce que** le au moins un dispositif de traitement est conçu pour

évaluer les formes d'onde multi-pics afin d'identifier au moins certaines des formes d'onde multi-pics comme étant associées à des particules uniques et au moins certaines autres des formes d'onde multi-pics comme étant associées à de multiples particules ; et
caractériser les particules comme étant soit des particules uniques soit des particules multiples sur la base de l'évaluation.

14. Cytomètre en flux (100) selon la revendication 13, comportant en outre un système de tri (116) incluant un contrôleur de tri (118) programmé pour prendre des décisions de tri à l'aide des caractérisations des particules.

15. Cytomètre en flux (100) selon la revendication 13, dans lequel le détecteur (110A) est positionné afin de détecter une lumière diffusée vers l'avant et comportant en outre un second détecteur (110B) positionné pour détecter un élément parmi une lumière diffusée latéralement et une lumière fluorescente, et dans lequel l'évaluation des formes d'onde multi-pics comporte en outre l'évaluation d'une forme d'onde produite par le second détecteur (110).

**FIG. 1**

FIG. 2A

FIG. 2B

FIG. 2C

FIG. 2D

**194**

**FIG. 3**

**196**

202 — Inject Bead into Fluid Stream

204 — Determine Fluid Flow Velocity

206 — Measure Pulse Width of Radiated Light from Bead

208 — Compute Width of Light Beam

210 — Determine Minimum Allowable Pulse Width

212 — Determine Maximum Allowable Pulse Width

**FIG. 4**

106
From Fluid
Nozzle

220
Bead

108A

Light
Source

130A

Fluid
Stream
126

$t_0$

Detector
110

$D_1$

108B

Light
Source

130B

$t_1$

**FIG. 5**

FIG. 6

FIG. 7

240

256 No Particle Detected

252 Detect Pulse: Does Waveform Exceed Minimum Voltage Threshold ?

**No** (from 252 to 256)

**Yes**

254 Does Pulse Width Exceed Minimum Pulse Width Threshold ?

**No** (from 254 to 256)

**Yes**

258 Particle Detected

**FIG. 8**

260

270 — Detect Multiple Peaks within Maximum Allowable Pulse Width ? → **No** → 272 — No Multi-peak Event Detected

**Yes**

274 — Multi-peak Event Detected

275 — Does Second Peak End before Minimum Allowable Pulse Width ? → **Yes** → 276 — Characterize as Multiple Particles

**No**

277 — Do Peaks Overlap ? → **Yes** → 278 — Perform Valley Analysis

**No**

280 — Perform Multiple Channel Analysis

**FIG. 9**

**290**

292 — Multi-peak Event ?

**Yes**

294 — Evaluate Shape of Waveform at Valley

296 — Characterize Particle(s)

FIG. 10

**FIG. 11**

**FIG. 12**

**320**

**322**

Multi-peak
Event
?

**Yes**

**324**

Evaluate
a Second
Waveform
for Particle(s)

**326**

Characterize
Particle(s)

**FIG. 13**

188

156

192

Midpoint

332

330

Midpoint

**FIG. 14**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010233753 A1
- US 2012236291 A1